# EUROPEAN PATENT APPLICATION

(11) **EP 2 752 392 A1**
(43) Date of publication of application: **09.07.2014**
(21) Application number: 12828155.7
(22) Date of filing: 29.08.2012
(51) Int. Cl.: C01G 25/02, C01G 23/04, C08K 3/20, C08L 101/00

(54) **INORGANIC OXIDE TRANSPARENT DISPERSION AND RESIN COMPOSITION FOR FORMING TRANSPARENT COMPOSITE, AND TRANSPARENT COMPOSITE AND OPTICAL MEMBER**

(30) Priority: 31.08.2011 JP 2011188631
(71) Applicant: Sumitomo Osaka Cement Co., Ltd., Tokyo 102-8465 (JP)
(72) Inventor: SATO Yoichi, Tokyo 102-8465 (JP); KURINO Yasuyuki, Tokyo 102-8465 (JP)
(74) Representative: Cabinet Laurent & Charras
(86) International application number: PCT/JP2012/071775
(87) International publication number: WO 2013/031799

(57) **Abstract**

An inorganic oxide transparent dispersion, a resin composition used to form a transparent composite, a transparent composite, and an optical member which can improve the optical characteristics and mechanical characteristics of resins while maintaining the transparency of the resins are provided by uniformly dispersing inorganic oxide particles in a high-polarity solvent. The inorganic oxide transparent dispersion contains inorganic oxide particles which are modified using a surface modifier and have an average dispersed particle diameter in a range of 1 nm to 50 nm, a high-polarity solvent which dissolves resins and does not easily erode curable resins obtained by curing the resins, and a basic substance, and the high-polarity solvent is any one or two of alcohols and ethers.

## Description

### Technical Field

The present invention relates to an inorganic oxide transparent dispersion, a resin composition used to form a transparent composite, a transparent composite, and an optical member, and particularly specifically to an inorganic oxide transparent dispersion which enables an inorganic oxide to be preferbly used as a filler material of an organic resin so as to improve the optical characteristics and mechanical characteristics of the resin while maintaining the transparency of the resin, a resin composition used to form a transparent composite containing the inorganic oxide transparent dispersion and a resin, a transparent composite formed using the resin composition used to form a transparent composite, and an optical member containing the transparent composite.

Priority is claimed based on Japanese Patent Application No. 2011-188631, filed August 31, 2011, the content thereof is incorporated herein by reference.

### Background Art

Generally, optical characteristics, such as transparency, high refractive index, and wavelength dispersibility of the refractive index, of optical members such as lenses, prisms, optical waveguides and optical films that configure the internal optical systems of optical products are important when producing the optical products in a desired design. In addition, thermal characteristics, such as thermal expansion properties with respect to changes in environmental temperatures, and mechanical characteristics, such as mechanical strength with respect to an external force, are also important. In addition, in the case of optical films and the like, the adhesiveness with base materials to which optical films are provided is also important.

Generally, an organic resin, such as an epoxy resin, an acryl resin, a polyester resin or a polycarbonate resin, is used to produce optical members. In addition, for the purpose of optimally designing the optical and mechanical characteristics of the organic resin, a transparent composite complexed by adding inorganic oxide particles to the organic resin is proposed.

The inorganic oxide particles being added are appropriately selected depending on the required optical characteristics, thermal characteristics and mechanical characteristics of the transparent composite. For example, in a case in which it is necessary to increase the refractive index of the organic resin, zirconia, titania or the like having a high refractive index is selected as a metal oxide.

The transparent composite is obtained in the following manner. First, to uniformly disperse the inorganic oxide particles in the transparent composite, the inorganic oxide particles are dispersed in a solvent so as to produce an inorganic oxide dispersion, and the inorganic oxide dispersion and a resin are mixed, thereby producing a resin composition used to form the transparent composite.

In addition, the resin composition used to form the transparent composite is fed into forming dies, the resin composition in each forming die is heated or depressurized and dried so as to eliminate the solvent, and then the resin is cured through heating or the radiation of ultraviolet rays or the like, whereby transparent composites having a desired shape can be obtained.

In addition, the resin composition used to form the transparent composite is applied to transparent plastic base materials using a spin coating method or a screen printing method, the resin composition on each transparent plastic base material is heated or depressurized and dried so as to eliminate the solvent, and then the resin is cured through heating or the radiation of ultraviolet rays or the like, whereby transparent composites having a desired film shape can be obtained.

In the transparent composites, a low-polarity non-aqueous organic resin having a low polarity is used as the resin to prevent the dimensional stability from being impaired due to the resin absorbing water when the humidity of the environment changes.

Meanwhile, in order to prevent the inorganic oxide particles from being eccentrically present in the low-polarity organic resin and to uniformly disperse the inorganic oxide particles, it is necessary to ensure interface affinity between the surfaces of the inorganic oxide particles and the low-polarity organic resin, and therefore it is necessary to modify the surfaces of the inorganic oxide particles so as to make the surfaces have a polarity as low as that of the low-polarity organic resin.

In a case in which the transparent composite is applied to optical members, it is necessary to disperse the inorganic oxide particles in the transparent composite as monodispersely as possible to obtain a more transparent composite, and therefore it is necessary to increase the dispersibility of the inorganic oxide particles in the inorganic oxide dispersion which are to be mixed with the low-polarity organic resin, and to increase the transparency of the inorganic oxide dispersion as well.

In order to obtain transparent composites having the above-described characteristics, a dispersion or a curable composition obtained by treating the surfaces of metallic oxide particles using a surface modifier having a reactive group and dispersing the surface-modified metallic oxide particles in a low-polarity solvent such as toluene or methyl ethyl ketone is proposed (refer to PTL 1 to 3 and the like).

### Citation List

### Patent Literature

[PTL 1] Japanese Laid-Open Patent Publication No. 2010-195967
[PTL 2] Japanese Laid-Open Patent Publication No. 2007-217242
[PTL 3] Japanese Laid-Open Patent Publication No. 2004-269644

### Summary of Invention

### Technical Problem

However, the dispersions or curable compositions proposed in PTL 1 to 3 and the like of the related art had the following problems.
(1) In the dispersions or curable compositions obtained using the low-polarity solvent such as toluene, the low-polarity solvent was likely to erode plastic base materials, and therefore there was a problem in that the transparency of composites to be obtained was not sufficient depending on the production conditions of transparent composites, particularly, the kind of plastic base materials to which the dispersions or curable compositions were to be applied, the time period the low-polarity solvent was in contact with plastic base materials, the thickness of transparent composites, and treatment conditions such as the heating temperature.
(2) Since the surfaces of the metallic oxide particles which are used to produce the dispersions or curable compositions are treated using a surface modifier having a low polarity, the surfaces of the surface-modified metallic oxide particles exhibit a low polarity. Meanwhile, examples of high-polarity solvents having a little probability of eroding plastic base materials include alcohols, ethers and the like. Therefore, it is extremely difficult to uniformly disperse the surface-modified metallic oxide particles having a low polarity in a high-polarity solvent having a little probability of eroding plastic base materials, and therefore, there was a problem in that, in a case in which surface-modified metallic oxide particles having a low polarity were dispersed in a high-polarity solvent, the dispersibility of the surface-modified metallic oxide particles in the obtained dispersions or curable compositions was poor, and, consequently, in a case in which the above-described dispersions or curable compositions were used, it was not possible to obtain highly transparent composites.

The invention has been made in consideration of the above-described circumstances, and an object of the invention is to provide an inorganic oxide transparent dispersion, a resin composition used to form a transparent composite, a transparent composite, and an optical member which can improve the optical characteristics and mechanical characteristics of resins while maintaining the transparency of the resins by uniformly dispersing inorganic oxide particles in a high-polarity solvent.

### Solution to Problem

As a result of intensive studies to solve the above-described problems, the present inventors and the like found that, when a basic substance is added to a dispersion containing inorganic oxide particles modified using a surface modifier and a high-polarity solvent, the dispersibility of the inorganic oxide particles in the high-polarity solvent improves, and completed the invention.

That is, an inorganic oxide transparent dispersion of the invention contains inorganic oxide particles which are modified using a surface modifier and have an average dispersed particle diameter in a range of 1 nm to 50 nm; a high-polarity solvent which dissolves resins and does not easily erode curable resins obtained by curing the resins; and a basic substance, and the high-polarity solvent is any one or two of alcohols and ethers.

The inorganic oxide particles preferably contain any one of metallic oxide particles and non-metallic oxide particles as a main component.

A resin composition used to form a transparent composite of the invention contains the inorganic oxide transparent dispersion of the invention and a resin.

A transparent composite of the invention is formed using the resin composition used to form a transparent composite of the invention.

An optical member of the invention contains the transparent composite of the invention.

### Advantageous Effects of Invention

According to the inorganic oxide transparent dispersion of the invention, since inorganic oxide particles which are modified using a surface modifier and have an average dispersed particle diameter in a range of 1 nm to 50 nm, a high-polarity solvent which dissolves resins and does not easily erode curable resins obtained by curing the resins, and a basic substance are contained, and any one or two of alcohols and ethers are used as the high-polarity solvent, it is possible to improve the dispersibility of the inorganic oxide particles modified using a surface modifier in the high-polarity solvent in the presence of the basic substance. Therefore, it is possible to favorably disperse the inorganic oxide particles modified using a surface modifier in the high-polarity solvent, and, consequently, when the inorganic oxide transparent dispersion is used, it is possible to easily obtain a stable transparent composite having excellent transparency irrespective of the manufacturing conditions of the transparent composite.

### Brief Description of Drawings

FIG. 1 is a pattern diagram illustrating an action of a basic substance in an inorganic oxide transparent dispersion of the invention.
FIG. 2 is a view illustrating the measurement results of the light transmittance of a transparent composite of Example 9 of the invention.

### Description of Embodiments

Embodiments for carrying out an inorganic oxide transparent dispersion, a resin composition used to form a transparent composite, a transparent composite, and an optical member of the invention will be described.

Meanwhile, the embodiments are merely to specifically describe the purposes of the invention for better understanding, and do not limit the invention unless particularly otherwise specified.

### [Inorganic oxide transparent dispersion]

An inorganic oxide transparent dispersion of the present embodiment contains inorganic oxide particles which are modified using a surface modifier and have an average dispersed particle diameter in a range of 1 nm to 50 nm, a high-polarity solvent which dissolves resins and does not easily erode curable resins obtained by curing the resins, and a basic substance.

### [Inorganic oxide particles]

The inorganic oxide particles used in the embodiment preferably contain any one of metallic oxide particles and non-metallic oxide particles as a main component.

Metallic oxide particles that are generally used as a filler for resins are preferably used as the metallic oxide particles, and examples of the above-described metallic oxide particles that can be used include zirconium oxide (ZrO₂: zirconia), titanium oxide (TiO₂: titania), aluminum oxide (Al₂O₃: alumina), iron oxide (Fe₂O₃, Fe₃O₄), copper oxide (CuO), zinc oxide (ZnO), yttrium oxide (Y₂O₃: yttria), niobium oxide (Nb₂O₅), molybdenum oxide (MoO₃, MoO₂), indium oxide (In₂O₃), tin oxide (SnO₂), tantalum oxide (Ta₂O₅, TaO₂), tungsten oxide (WO₃, WO₂), lead oxide (PbO), bismuth oxide (Bi₂O₃), cerium oxide (CeO₂: ceria), antimony oxide (Sb₂O₃, Sb₂O₅), and the like.

As the non-metallic oxide particles, it is possible to use, for example, silicon oxide (SiO₂: silica), boron oxide (B₂O₃) or the like which is generally used as a filler for resins.

The metallic oxide particles and the non-metallic oxide particles may be solely used or may be used in a mixture of two or more kinds of oxide particles.

Among the above-described inorganic oxide particles, zirconium oxide (ZrO₂: zirconia) or titanium oxide (TiO₂: titania) is preferable since a high refractive index can be given to an obtained transparent composite in a case in which the transparent composite is produced using the inorganic oxide transparent dispersion of the embodiment.

In a case in which zirconium oxide (ZrO₂) particles (zirconia particles) are used, any one of monoclinic zirconia particles and tetragonal zirconia particles are used, or both monoclinic zirconia particles and tetragonal zirconia particles are used, but tetragonal zirconia particles are preferable for the following reasons.

The reasons for preferably using tetragonal zirconia particles are that, when the average dispersed particle diameter of fine particles is decreased to 20 nm or less during the synthesis of the fine particles, tetragonal zirconia particles become more stable than monoclinic zirconia particles known in the related art, the hardness increases, the mechanical characteristics of resin composites obtained by dispersing the tetragonal zirconia particles in a resin are improved, and, furthermore, the resin composites exhibit a higher toughness than resin composites obtained by adding monoclinic zirconia particles due to volume expansion called martensite transformation.

Meanwhile, cubic zirconia particles may be added as long as desired characteristics are not impaired.

The average dispersed particle diameter of the inorganic oxide particles in the inorganic oxide transparent dispersion is preferably in a range of 1 nm to 50 nm, more preferably in a range of 3 nm to 30 nm, and still more preferably in a range of 5 nm to 20 nm.

When the average dispersed particle diameter is less than 1 nm, it becomes difficult to manufacture the inorganic oxide particles, which is not preferable. On the other hand, when the average dispersed particle diameter exceeds 50 nm, there is a concern that the transparency of transparent composites produced using the inorganic oxide transparent dispersion may deteriorate, which is not preferable.

Meanwhile, the average dispersed particle diameter in the embodiment refers to the volume dispersed particle diameter (D50) at the 50% by volume point in a cumulative volume percentage obtained by measuring the particle diameters of the inorganic oxide particles in the inorganic oxide transparent dispersion using a dynamic light scattering method.

The content ratio (% by mass) of the inorganic oxide particles in the inorganic oxide transparent dispersion is not particularly limited, and may be appropriately selected in accordance with a manufacturing process used to obtain transparent composites. In order to obtain a favorable handling property and to improve the production efficiency, the content ratio is preferably in a range of 1% by mass to 50% by mass, and more preferably in a range of 10% by mass to 30% by mass.

The inorganic oxide particles are preferably modified on the surfaces using a surface modifier since it is necessary to ensure the interface affinity between the surfaces and the above-described resin.

The surface modifier is not particularly limited as long as the compatibility of the surface modifier with the resin is favorable, and examples thereof include compounds represented by the following formula (1).

Rₓ-Si-R'₄₋ₓ (1)

In the formula (1), R represents one or two selected from a group consisting of vinyl groups, allyl groups, 3-glycidoxypropyl group, 2-(3,4 epoxy cyclohexyl)ethyl group, 3-acryloxypropyl group, 3-methacrylopropyl group, styryl groups, 3-aminopropyl group, N-2(aminoethyl)3-aminopropyl group, N-phenyl-3-aminopropyl group, 3-mercaptopropyl group, 3-isocyanate propyl group, alkyl groups having 1 to 20 carbon atoms and phenyl groups; R' represents one or two or more selected from a group consisting of chlorine, hydroxyl groups, alkoxy groups having 1 to 20 carbon atoms and acetoxy groups; and X represents 0 or an integer of 1 to 4.

Examples of the surface modifier include silane coupling agents, titanium coupling agents, denatured silicone, and the like. Examples of the silane coupling agents include vinyl trimethoxysilane, vinyl triethoxysilane, vinyl trichlorosilane, vinyl triphenoxysilane, 3-glycidoxypropyl trimethoxysilane, 3-glycidoxypropyl triethoxysilane, 3-glycidoxypropyl trichlorosilane, 3-glycidoxypropyl triphenoxysilane, p-styryl trimethoxysilane, p-styryl triethoxysilane, p-styryl trichlorosilane, p-styryl triphenoxysilane, 3-acryloxypropyl trimethoxysilane, 3-acryloxypropyl triethoxysilane, 3-acryloxypropyl trichlorosilane, 3-acryloxypropyl triphenoxysilane, 3-methacryloxypropyl trimethoxysilane, 3-methacryloxypropyl triethoxysilane, 3-methacryloxypropyl trichlorosilane, 3-methacryloxypropyl triphenoxysilane, and the like.

In addition, examples of the silane coupling agents include allyl trimethoxysilane, allyl triethoxysilane, allyl trichlorosilane, allyl triphenoxysilane, vinyl ethyl dimethoxysilane, vinyl ethyl diethoxysilane, vinyl ethyl dichlorosilane, vinyl ethyl diphenoxysilane, 3-glycidoxypropyl ethyl dimethoxysilane, 3-glycidoxypropyl triethyl diethoxysilane, 3-glycidoxypropyl ethyl dichlorosilane, 3-glycidoxypropyl ethyl diphenoxysilane, p-styryl ethyl dimethoxysilane, p-styryl ethyl diethoxysilane, p-styryl triethyl dichlorosilane, p-styryl ethyl diphenoxysilane, 3-acryloxypropyl ethyl dimethoxysilane, 3-acryloxypropyl ethyl diethoxysilane, 3-acryloxypropyl ethyl dichlorosilane, 3-acryloxypropyl ethyl diphenoxysilane, 3-methacryloxypropyl ethyl dimethoxysilane, 3-methacryloxypropyl ethyl diethoxysilane, 3-methacryloxypropyl ethyl dichlorosilane, 3-methacryloxypropyl ethyl diphenoxysilane, ally ethyl dimethoxysilane, allyl ethyl diethoxysilane, ally ethyl dichlorosilane, ally ethyl diphenoxysilane, and the like.

Furthermore, examples of the silane coupling agents include vinyl diethyl methoxysilane, vinyl diethyl ethoxysilane, vinyl diethyl chlorosilane, vinyl diethyl phenoxysilane, 3-glycidoxypropyl diethyl methoxysilane, 3-glycidoxypropyl diethyl ethoxysilane, 3-glycidoxypropyl diethyl chlorosilane, 3-glycidoxypropyl diethyl phenoxysilane, p-styryl diethyl methoxysilane, p-styryl diethyl ethoxysilane, p-styryl diethyl chlorosilane, p-styryl diethyl phenoxysilane, 3-acryloxypropyl diethyl methoxysilane, 3-acryloxypropyl diethyl ethoxysilane, 3-acryloxypropyl diethyl chlorosilane, 3-acryloxypropyl diethyl phenoxysilane, 3-methacryloxypropyl diethyl methoxysilane, 3-methacryloxypropyl diethyl ethoxysilane, 3-methacryloxypropyl diethyl chlorosilane, 3-methacryloxypropyl diethyl phenoxysilane, allyl diethyl methoxysilane, allyl diethyl ethoxysilane, allyl diethyl chlorosilane, allyl diethyl phenoxysilane, and the like.

Examples of the denatured silicone include epoxy-denatured silicone, epoxy and polyether-denatured silicone, methacryl-denatured silicone, phenol-denatured silicone, methyl styryl-denatured silicone, acryl-denatured silicone, alkoxy-denatured silicone, methyl hydrogen silicone, and the like.

The amount of the surfaces of the inorganic oxide particles modified using the surface modifier is not particularly limited as long as the compatibility of the obtained surface-modified inorganic oxide particles and the resin is favorable; however, particularly, in a case in which it is necessary to improve the refractive index of the above-described resin, in order to achieve the balance between the transparency of the inorganic oxide transparent dispersion and the refractive index of the resin, the modification amount of the surface modifier is preferably in a range of 5% by mass to 100% by mass, and more preferably in a range of 10% by mass to 50% by mass with respect to the total amount of the inorganic oxide particles.

### "High-polarity solvent"

The high-polarity solvent is preferably an alcohol or an ether which easily dissolves the above-described resin or a resin described below and does not easily erode a curable resin obtained by curing the resin through heating and curing, the radiation of ultraviolet rays, or the like. Any one of the alcohol and the ether may be solely used, or a mixture of the alcohol and the ether may be used as the alcohol or the ether.

Here, "the alcohol or the ether which dissolves the resin" means that the alcohol or the ether can dissolve resins which have not yet been cured through heating and curing, the radiation of ultraviolet rays, or the like. That is, "the high-polarity solvent which dissolves resins and does not easily erode curable resins obtained by curing the resin" is another expression of "the high-polarity solvent which has both the solubility of uncured curable resins and a small erosion property with respect to the cured curable resins".

Here, the alcohol is preferably an alcohol having 4 or less carbon atoms in the principal chain, and examples thereof include methyl alcohol, ethyl alcohol, propyl alcohol, isopropyl alcohol, butyl alcohol, sec-butyl alcohol, isobutyl alcohol, tert-butyl alcohol, ethylene glycol, propylene glycol, trimethylene glycol, 1,2-butylene glycol, 1, 3-butylene glycol, tetramethylene glycol, 2,3-butylene glycol, and the like. Among the above-described alcohols, isopropyl alcohol is preferable.

Examples of the ether include ethylene glycol monomethyl ether (methylcellosolve), ethylene glycol monoethyl ether (ethylcellosolve), propylene glycol monomethyl ether, propylene glycol monoethyl ether, dipropylene glycol, and the like, and propylene glycol monomethyl ether is particularly preferable.

Here, an alcohol selected from a variety of the above-described alcohols may be used, or a mixture of two or more alcohols may be used as the alcohol.

In addition, an ether selected from a variety of the above-described ethers may be used, or a mixture of two or more ethers may be used as the ether.

Furthermore, an alcohol and ester-mixed solution obtained by selecting one or two alcohols from a variety of the above-described alcohols, selecting one or two ethers from a variety of the above-described ethers, and mixing the selected alcohols and the selected ethers may be used.

### "Basic substance"

The basic substance in the embodiment is not particularly limited as long as the basic substance contains a hydroxide of an alkali metal or an alkali earth metal, ammonia, an amine, and the like, and has a hydrogen-ion exponent (pH) of larger than 7 in a case in which the basic substance is dissolved in water.

Examples of the basic substance include inorganic basic substances such as calcium hydroxide, magnesium hydroxide, manganese hydroxide, iron hydroxide, zinc hydroxide, copper hydroxide, lanthanum hydroxide, aluminum hydroxide, iron hydroxide, ammonia, ammonia hydroxide, potassium hydroxide and sodium hydroxide.

In addition, examples of the basic substance include amines such as methylamine, ether amine, ethylamine, trimethylamine, triethylamine, triethanolamine, N,N-diisopropylethylamine, piperidine, piperazine, morpholine, quinuclidine, 1,4-diazabicyclo[2.2.2]octane (DABCO), pyridine, 4-dimethylaminopyridine, ethylenediamine, tetramethylethylenedimaine (TMEDA), hexamethylenediamine, aniline, catecholamine and phenethylamine;
1,8-bis(dimethylamino) naphthalene (proton sponge), aminoacid, amantadine, spermidine, and the like.

The inorganic basic substance, the amines, and other basic substances may be solely used, or may be used in a mixture of two or more basic substances.

Among the above-described basic substances, ammonia is preferable since ammonia is easy to handle and does not easily remain as an impurity.

The basic substance may be added in an appropriately-adjusted amount that is necessary to improve the dispersibility of the inorganic oxide particles in the high-polarity solvent.

The content of the basic substance in the inorganic oxide transparent dispersion of the embodiment is preferably in a range of 0.01% by mass to 10% by mass, and more preferably in a range of 0.03% by mass to 2% by mass with respect to the total amount of the inorganic oxide particles.

When the amount of the basic substance is less than 0.01% by mass with respect to the total amount of the inorganic oxide particles, the dispersibility of the inorganic oxide particles in the high-polarity solvent does not improve. Meanwhile, even when the content of the basic substance exceeds 10% by mass with respect to the total amount of the inorganic oxide particles, there is no significant difference in the effect that disperses the inorganic oxide particles, and, furthermore, any excessively-added basic substance becomes an impurity, which is not preferable.

When the inorganic oxide transparent dispersion of the embodiment contains the basic substance, it is possible to favorably disperse the surface-modified inorganic oxide particles in the high-polarity solvent.

The details of the mechanism regarding how the above-described effect can be obtained is not clear; however, for example, in the case of inorganic oxide particles modified on the surfaces using a silane coupling agent, it is considered that the effect is obtained as follows.

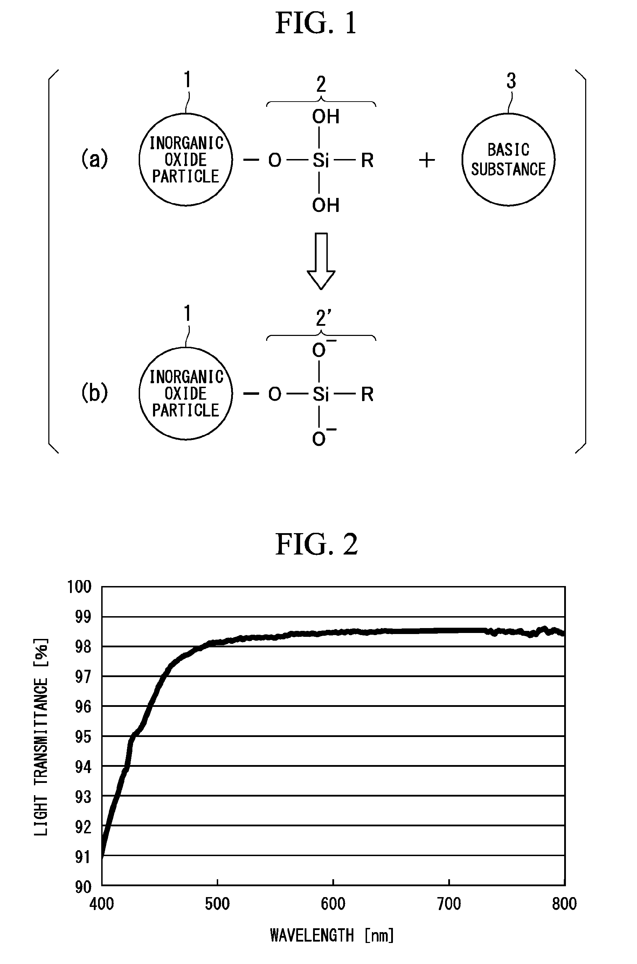

As illustrated in FIG. 1(a), alkoxy groups in a silane coupling agent 2 that modifies the surface of an inorganic oxide particle 1 turn into hydroxyl groups (OH groups) through hydrolysis, and one of the OH groups chemically bonds with the inorganic oxide particle 1 through a hydrogen bond or dehydration synthesis, and the rest of the OH groups remain non-bonded (OH group parts).

When a small amount of the basic substance 3 is added to a dispersion in which the inorganic oxide particles 1 in the above-described state are dispersed, protons escape from the non-bonded OH groups in the silane coupling agent 2, and the polarity of the above-described parts increases (OH→O⁻) as illustrated in FIG. 1(b).

As described above, it is considered that, when the silane coupling agent 2 that modifies the surface of an inorganic oxide particle 1 is changed to a silane coupling agent 2' having a high polarity in some parts, the dispersibility in the high-polarity solvent improves.

### "Method of manufacturing the inorganic oxide transparent dispersion"

The inorganic oxide transparent dispersion of the embodiment can be easily obtained by uniformly mixing the inorganic oxide particles which are modified using a surface modifier and have an average dispersed particle diameter in a range of 1 nm to 50 nm, the high-polarity solvent which dissolves resins and does not easily erode curable resins obtained by curing the resins; and the basic substance.

As the inorganic oxide particles, powder having a primary particle diameter in a range of 1 nm to 10 nm may be used, or a dispersion obtained by dispersing the above-described powder in a dispersion medium may be used.

Here, the method of manufacturing the inorganic oxide particles modified using a surface modifier will be described.

First, inorganic oxide particles are produced.

For example, diluted ammonia water is added under stirring to a metallic salt solution obtained by dissolving a metallic salt such as zirconium oxychloride octahydrate or titanium trichloride in pure water, thereby preparing a metallic oxide precursor slurry.

Next, an aqueous solution of an inorganic salt such as sodium sulfate is added under stirring to the slurry, thereby producing a mixture. At this time, the addition amount of the inorganic salt is set in a range of 20% by mass to 40% by mass with respect to the metal oxide-converted value of metal ions in a metal salt solution.

Next, the mixture is dried in the atmosphere at a temperature in a range of 100°C to 150°C for 24 hours to 36 hours, thereby obtaining a solid substance.

Next, the solid substance is crushed using an automatic mortar or the like, and then fired in the atmosphere at a temperature in a range of 300°C to 700°C for 1 hour to 6 hours, for example, at 500°C for 3 hours.

Next, the fired substance is injected into pure water and stirred so as to have a slurry form. Next, the added inorganic salt is washed, sufficiently removed, and then dried. Then, metallic oxide particles which are a kind of inorganic oxide particles are obtained.

Next, water or an alcohol aqueous solution is added to the above-obtained metallic oxide particles so as to form a slurry, then, the above-described surface modifier is added to the slurry, and appropriately mixed. Then, inorganic oxide particles modified on the surfaces using a surface modifier can be obtained.

In this state, since the surface-modified inorganic oxide particles are dispersed in the slurry or are settled on the bottom of the slurry, the surface-modified inorganic oxide particles are collected in a solid substance state by carrying out solid-liquid separation or the like on the slurry. When the solid substance is dried, it is possible to obtain inorganic oxide particles having surfaces modified by the surface modifier.

Meanwhile, the basic substance may be added when the surface-modified inorganic oxide particles are obtained by adding the above-described surface modifier in addition to being mixed with the inorganic oxide particles and the high-polarity solvent when the above-described inorganic oxide transparent dispersion is produced.

In this case, since the amount of the basic substance decreases due to solid-liquid separation or the like, it is necessary to adjust the amount of the basic substance to be added to the slurry in consideration of the basic substance being reduced.

In a case in which the basic substance is added in a surface modification step in which the surface modifier is added to and mixed with the slurry, it is preferably to add the basic substance to the metallic oxide particles in a range of 0.5% by mass to 10% by mass, and preferably in a range of 1% by mass to 5% by mass.

### [Resin composition used to form a transparent composite]

The resin composition used to form a transparent composite of the embodiment is a resin composition containing the inorganic oxide transparent dispersion of the embodiment and a resin.

The resin is not particularly limited as long as the resin can be mixed with the high-polarity solvent in a uncured state, and examples of the resin that can be used include melamine resins, phenol resins, polyester resins, urethane resins, acryl resins, vinyl chloride resins, polypropylene resins, polycarbonate resins, polyethylene terephthalate (PET) resins, epoxy resins and the like. Among the above-described resins, acryl resins are preferable.

The content ratio of the inorganic oxide particles in the resin composition used to form a transparent composite is preferably in a range of 10% by mass to 60% by mass with respect to the total mass of the inorganic oxide particles and the resin.

When the content ratio of the inorganic oxide particles is set in the above-described range, and the inorganic oxide particles are mixed with the resin, the characteristics of the inorganic oxide particles are supplied, and the inorganic oxide particles are favorably handled when forming a composite described below, which is preferable.

Typically-used additives such as an organic solvent and a photo initiator may be appropriately added to the resin composition used to form a transparent composite as necessary.

The method of manufacturing the resin composition used to form a transparent composite is not particularly limited as long as the inorganic oxide particle transparent dispersion of the embodiment and the resin can be uniformly mixed, and a well-known stirring method can be used.

### [Transparent composite]

The transparent composite of the embodiment is a transparent composite which is formed using the resin composition used to form a transparent composite of the embodiment and is transparent with respect to visible light.

The transmittance of the transparent composite in a wavelength band of 400 nm to 800 nm, which is in the visible light region, is preferably 80% or more, and more preferably 90% or more in a case in which the thickness of the transparent composite is 30 µm.

In a case in which the transparent composite, for example, a bulk body having a three-dimensional shape is produced, the resin composition used to form a transparent composite of the embodiment is fed into a mold having a predetermined shape, and then is cured by carrying out heating, the radiation of ultraviolet rays, or the like depending on the kind of the resin.

In addition, in a case in which a coated film is produced, the resin composition used to form a transparent composite of the embodiment is applied to a plastic base material, and then is thermally cured through heating or photo-cured through the radiation of ultraviolet rays as necessary.

The plastic base material is not particularly limited as long as the base material is made of plastic, and may be appropriately selected depending on usage. Examples of the plastic base material include acryl base materials, acryl base materials containing highly elastic acryl rubber, acryl and styrene copolymer base materials, polystyrene base materials, polyethylene base materials, polypropylene base materials, polycarbonate base materials, polyethylene terephthalate (PET) base materials, triallyl ester cyanurate (TAC) base materials, epoxy base materials, and the like having a sheet shape or a film shape. In addition, as the plastic base material, one of the above-described base materials may be solely used, or one or two or more base materials laminated into a laminate structure may be used.

Examples of the coating method used to form the coated film include a bar coating method, a spin coating method, a dip coating method, a gravure coating method, a spraying method, a roller method, a brush coating method, and the like.

### [Optical member]

The optical member of the embodiment includes the above-described transparent composite.

The optical member is not particularly limited as long as transparent plastic base materials are used for the optical member, and examples thereof include optical members, prism sheets, optical fiber communication apparatuses, LED sealing agents, and the like which are used in a variety of devices such as film-integrated cameras such as cameras and lens-attached films; a variety of camera lenses such as video cameras and in-vehicle cameras; optical pickup lenses or micro-lens arrays in CDs, CD-ROMs, MOs, CD-Rs, CD-Videos and DVDs; OA equipment such as copy machines and printers; and the like.

The method of mounting the transparent composite of the embodiment in optical members is not particularly limited, and the transparent composite may be mounted in optical members using a well-known method.

As described above, according to the inorganic oxide transparent dispersion of the embodiment, since the inorganic oxide particles which are modified using the surface modifier and have an average dispersed particle diameter in a range of 1 nm to 50 nm, the high-polarity solvent which dissolves resins and does not easily erode curable resins obtained by curing the resins, and the basic substance are contained, it is also possible to favorably disperse inorganic oxide particles modified using the surface modifier in the high-polarity solvent.

According to the resin composition used to form a transparent composite of the embodiment, since the resin is contained in the inorganic oxide transparent dispersion containing the surface-modified inorganic oxide particles, the high-polarity solvent and the basic substance, the surface-modified inorganic oxide particles, the high-polarity solvent which does not easily erode resins and curable resins obtained by curing the resins, and the basic substance are uniformly mixed, and therefore it is possible to form transparent composites irrespective of the manufacturing conditions.

According to the transparent composite of the embodiment, since the transparent composite is formed using the resin composition used to form a transparent composite, it is possible to maintain the characteristics and transparency of the surface-modified inorganic oxide particles by uniformly dispersing the surface-modified inorganic oxide particles in the resin.

According to the optical member of the embodiment, since the transparent composite of the embodiment is used, it is possible to supply the characteristics of the surface-modified inorganic oxide particle to the optical member while maintaining the transparency of the optical member.

### EXAMPLES

Hereinafter, the invention will be specifically described using examples and comparative examples, but the invention is not limited to the examples.

### [Example 1]

### "Production of zirconia particles"

Diluted ammonia water obtained by dissolving 344 g of 28% ammonia water in 20 L of pure water was added under stirring to an aqueous solution of zirconium salt obtained by dissolving 2615 g of zirconium oxychloride octahydrate in 40 L of pure water, thereby adjusting a zirconia precursor slurry.

Next, an aqueous solution of sodium sulfate obtained by dissolving 300 g of sodium sulfate in 5 L of pure water was added under stirring to the slurry. At this time, the addition amount of sodium sulfate was 30% by mass with respect to the zirconia-converted value of zirconium ions in the aqueous solution of zirconium salt.

Next, the mixture was dried in the atmosphere at 130°C for 24 hours using a dryer, thereby obtaining a solid substance. Next, the solid substance was crushed using an automatic mortar or the like, and then fired in the atmosphere at 500°C for 1 hour using an electric furnace, thereby obtaining a fired substance.

Next, the fired substance was injected into pure water and stirred so as to have a slurry form, then, the slurry was washed using a centrifugal separator so as to sufficiently remove the added sodium sulfate, thereby obtaining a solid substance.

After that, the solid substance was dried in the atmosphere at 130°C for 24 hours using a dryer, thereby producing zirconia particles.

The average primary particle diameter of the zirconia particles was measured using a field emission electron microscope JEM-2100F (manufactured by JEOL Ltd.), and the average primary particle diameter was 4 nm.

### "Modification of the surfaces of the zirconia particles"

10 g of water was added to 10 g of the above-described zirconia particles, stirred and mixed, thereby producing a zirconia transparent aqueous dispersion. Next, 5 g of 3-acryloxy propyl trimethoxysilane KBM-5103 (manufactured by Shin-Etsu Chemical Co., Ltd.) was added as the surface modifier to the zirconia transparent aqueous dispersion, thereby modifying the surfaces of the zirconia particles. Next, the surface-modified zirconia particles were separated from water through solid-liquid separation, and dried using a dryer.

### "Production of a zirconia transparent dispersion"

7 g of isopropyl alcohol and 0.03 g of ammonia water having a concentration of 28% as the basic substance were added to 3 g of the above-described surface-modified zirconia particles, and stirred, thereby obtaining a zirconia transparent dispersion.

Next, in order to measure the particle size distribution of zirconia in the zirconia transparent dispersion, a dispersion in which the content of the zirconia particles in the zirconia transparent dispersion was adjusted to 1% by mass was produced to measure the particle size distribution of zirconia in the zirconia transparent dispersion, and the particle size distribution of zirconia in the dispersion was measured using a dynamic light scattering-type particle size distribution measuring apparatus (manufactured by Malvern Instruments Ltd.). Here, the refractive index of zirconia was set to 2.15, and the refractive index of isopropyl alcohol was set to 1.37. As a result, the volume dispersed-particle diameter (D50) at the cumulative volume percentage of 50% by volume in the volume particle size distribution of the zirconia particles was 6 nm.

### [Example 2]

A zirconia transparent dispersion of Example 2 was obtained in the same manner as in Example 1 except for the fact that 0.04 g of 0.1 mol/L of potassium hydroxide (KOH) isopropyl alcohol solution (containing approximately 19.4% by mass of water: manufactured by Kanto Chemical Co., Inc.) was used instead of 0.03 g of ammonia water having a concentration of 28% as the basic substance.

As a result of measuring the particle size distribution of zirconia in the zirconia transparent dispersion in the same manner as in Example 1, the volume-dispersed particle diameter (D50) was 7 nm.

### [Example 3]

A zirconia transparent dispersion of Example 3 was obtained in the same manner as in Example 1 except for the fact that propylene glycol monomethyl ether (PGM) was used instead of isopropyl alcohol as the high-polarity solvent.

As a result of measuring the particle size distribution of zirconia in the zirconia transparent dispersion in the same manner as in Example 1, the volume-dispersed particle diameter (D50) was 6 nm.

### [Example 4]

### "Production of titania particles"

Diluted ammonia water obtained by dissolving 55 g of 28% ammonia water in 20 L of pure water was added under stirring to an aqueous solution of titanium salt obtained by dissolving 2445 g of titanium trichloride in 40 L of pure water, thereby adjusting a titania precursor slurry.

Next, an aqueous solution of sodium nitrate obtained by dissolving 300 g of sodium nitrate in 5 L of pure water was added under stirring to the slurry. At this time, the addition amount of sodium nitrate was 30% by mass with respect to the titania-converted value of titanium ions in the aqueous solution of titania salt.

Next, the mixture was dried in the atmosphere at 130°C for 24 hours using a dryer, thereby obtaining a solid substance. Next, the solid substance was crushed using an automatic mortar or the like, and then fired in the atmosphere at 500°C for 1 hour using an electric furnace, thereby obtaining a fired substance.

Next, the fired substance was injected into pure water and stirred so as to have a slurry form, then, the slurry was washed using a centrifugal separator so as to sufficiently remove the added sodium nitrate, thereby obtaining a solid substance.

After that, the solid substance was dried in the atmosphere at 130°C for 24 hours using a dryer, thereby producing titania particles.

The average primary particle diameter of the titania particles was measured using a field emission electron microscope JEM-2100F (manufactured by JEOL Ltd.), and the average primary particle diameter was 6 nm.

### "Modification of the surfaces of the titania particles"

The surfaces of the titania particles were modified using 3-acryloxy propyl trimethoxysilane KBM-5103 (manufactured by Shin-Etsu Chemical Co., Ltd.) as the surface modifier in the same manner as in Example 1. Next, the surface-modified titania particles were separated from water through solid-liquid separation, and dried using a dryer.

### "Production of a titania transparent dispersion"

A titania transparent dispersion of Example 4 was obtained in the same manner as in Example 1 except for the fact that the above-described surface-modified titania particles were used instead of the surface-modified zirconia particles.

As a result of measuring the particle size distribution of titania in the titania transparent dispersion in the same manner as in Example 1, the volume-dispersed particle diameter (D50) was 8 nm.

### [Comparative Example 1]

7 g of isopropyl alcohol was added to 3 g of surface-modified zirconia particles obtained according to Example 1, and stirred, thereby obtaining a zirconia dispersion of Comparative Example 1 containing no basic substance.

As a result of measuring the particle size distribution of zirconia in the zirconia dispersion in the same manner as in Example 1, the volume-dispersed particle diameter (D50) was 154 nm, and the dispersibility was poor.

### [Comparative Example 2]

A zirconia dispersion of Comparative Example 2 was obtained in the same manner as in Example 1 except for the fact that methyl ethyl ketone (MEK) was used instead of isopropyl alcohol.

As a result of measuring the particle size distribution of zirconia in the zirconia dispersion in the same manner as in Example 1, the volume-dispersed particle diameter (D50) was 6 nm.

### [Comparative Example 3]

A zirconia dispersion of Comparative Example 3 was obtained in the same manner as in Example 1 except for the fact that 0.04 g of water was used instead of 0.03 g of 28% ammonia water.

As a result of measuring the particle size distribution of zirconia in the zirconia dispersion in the same manner as in Example 1, the volume-dispersed particle diameter (D50) was 82 nm, and the dispersibility was poor.

### [Example 5]

### "Production of a resin composition used to form a transparent composite"

5 g of a zirconia transparent dispersion obtained according to Example 1, 5 g of an acryl resin PET-30 (manufactured by Nippon Kayaku Co., Ltd.), and 0.01 g of 1-[4-(2-hydroxyethoxy)-phenyl]-2-hydroxy-2-methyl-1-propane -1-on IRGACURE 2959 (manufactured by Ciba Specialty Chemicals) were mixed as the photopolymerization initiator, thereby obtaining a resin composition used to form a transparent composite of Example 5.

### [Example 6]

A resin composition used to form a transparent composite of Example 6 was obtained in the same manner as in Example 5 except for the fact that a zirconia transparent dispersion obtained according to Example 2 was used instead of the zirconia transparent dispersion obtained according to Example 1.

### [Example 7]

A resin composition used to form a transparent composite of Example 7 was obtained in the same manner as in Example 5 except for the fact that a zirconia transparent dispersion obtained according to Example 3 was used instead of the zirconia transparent dispersion obtained according to Example 1.

### [Example 8]

A resin composition used to form a transparent composite of Example 8 was obtained in the same manner as in Example 5 except for the fact that a titania transparent dispersion obtained according to Example 4 was used instead of the zirconia transparent dispersion obtained according to Example 1.

### [Comparative Example 4]

A resin composition used to form a transparent composite of Comparative Example 4 was obtained in the same manner as in Example 5 except for the fact that a zirconia dispersion obtained according to Comparative Example 1 was used instead of the zirconia transparent dispersion obtained according to Example 1.

### [Comparative Example 5]

A resin composition used to form a transparent composite of Comparative Example 5 was obtained in the same manner as in Example 5 except for the fact that a zirconia dispersion obtained according to Comparative Example 2 was used instead of the zirconia transparent dispersion obtained according to Example 1.

### [Comparative Example 6]

A resin composition used to form a transparent composite of Comparative Example 6 was obtained in the same manner as in Example 5 except for the fact that a zirconia dispersion obtained according to Comparative Example 3 was used instead of the zirconia transparent dispersion obtained according to Example 1.

### [Example 9]

### "Production of a transparent composite"

The resin composition used to form a transparent composite obtained according to Example 5 was applied to a polycarbonate substrate using a bar coating method, thereby forming a coated film. Next, the coated film-attached polycarbonate substrate was dried in an electric furnace at 60°C for 5 minutes, and then was irradiated with ultraviolet rays using a high-pressure mercury lamp so as to cure a resin in the coated film, thereby obtaining a 30 µm-thick transparent composite.

Next, the light transmittance of the transparent composite, that is, the combination of the polycarbonate substrate and the coated film was measured using a spectrophotometer V-570 (manufactured by JASCO Inc.).

The measurement results are illustrated in FIG. 2.

According to FIG. 2, the transmittance with respect to light having a wavelength of 400 nm was 91%.

### [Example 10]

A 30 µm-thick transparent composite of Example 10 was obtained in the same manner as in Example 9 except for the fact that a resin composition used to form a transparent composite obtained according to Example 6 was used instead of the resin composition used to form a transparent composite obtained according to Example 5.

Next, as a result of measuring the light transmittance of the transparent composite according to Example 9, the transmittance with respect to light having a wavelength of 400 nm was 90%.

### [Example 11]

A 30 µm-thick transparent composite of Example 11 was obtained in the same manner as in Example 9 except for the fact that a resin composition used to form a transparent composite obtained according to Example 7 was used instead of the resin composition used to form a transparent composite obtained according to Example 5.

Next, as a result of measuring the light transmittance of the transparent composite according to Example 9, the transmittance with respect to light having a wavelength of 400 nm was 91%.

### [Example 12]

A 30 µm-thick transparent composite of Example 12 was obtained in the same manner as in Example 9 except for the fact that a resin composition used to form a transparent composite obtained according to Example 8 was used instead of the resin composition used to form a transparent composite obtained according to Example 5.

Next, as a result of measuring the light transmittance of the transparent composite according to Example 9, the transmittance with respect to light having a wavelength of 400 nm was 92%.

### [Comparative Example 7]

A 30 µm-thick composite of Comparative Example 7 was obtained in the same manner as in Example 9 except for the fact that a resin composition used to form a transparent composite obtained according to Comparative Example 4 was used instead of the resin composition used to form a transparent composite obtained according to Example 5.

Next, as a result of measuring the light transmittance of the composite according to Example 9, the transmittance with respect to light having a wavelength of 400 nm was as low as 12%. This is considered to be because the dispersibility of the zirconia particles in the high-polarity solvent was poor, and therefore the zirconia particles agglomerated each other so as to degrade the transparency of the composite.

### [Comparative Example 8]

A 30 µm-thick composite of Comparative Example 8 was obtained in the same manner as in Example 9 except for the fact that a resin composition used to form a transparent composite obtained according to Comparative Example 5 was used instead of the resin composition used to form a transparent composite obtained according to Example 5.

Next, as a result of measuring the light transmittance of the composite according to Example 9, the transmittance with respect to light having a wavelength of 400 nm was as low as 75%. This is considered to be because the polycarbonate base material was eroded by methyl ethyl ketone (MEK) and thus was devitrified.

### [Comparative Example 9]

A 30 µm-thick composite of Comparative Example 9 was obtained in the same manner as in Example 9 except for the fact that a resin composition used to form a transparent composite obtained according to Comparative Example 6 was used instead of the resin composition used to form a transparent composite obtained according to Example 5.

Next, as a result of measuring the light transmittance of the composite according to Example 9, the transmittance with respect to light having a wavelength of 400 nm was as low as 75%.

This is considered to be because the zirconia dispersion was produced using water instead of 28% ammonia water such that the dispersibility of the zirconia particles in the high-polarity solvent was poor and therefore the dispersibility of the zirconia particles in the obtained composite was degraded.

From what has been described above, it was confirmed that not water but the basic substance is required to favorably disperse surface-modified zirconia particles having a decreased polarity on the surfaces in a high-polarity solvent.

### Industrial Applicability

The invention can be applied to inorganic oxide transparent dispersions which enable an inorganic oxide to be preferbly used as a filler material of an organic resin so as to improve the optical characteristics and mechanical characteristics of the resin while maintaining the transparency of the resin, resin compositions used to form a transparent composite containing the inorganic oxide transparent dispersion and a resin, transparent composites formed using the resin composition used to form a transparent composite, and optical members containing the transparent composite.

## Claims

1. An inorganic oxide transparent dispersion comprising:
inorganic oxide particles which are modified using a surface modifier and have an average dispersed particle diameter in a range of 1 nm to 50 nm;
a high-polarity solvent which dissolves resins and does not easily erode curable resins obtained by curing the resins; and
a basic substance,
wherein the high-polarity solvent is any one or two of alcohols and ethers.

2. The inorganic oxide transparent dispersion according to Claim 1,
wherein the inorganic oxide particles contain any one of metallic oxide particles and non-metallic oxide particles as a main component.

3. The inorganic oxide transparent dispersion according to Claim 1,
wherein the inorganic oxide particles are metallic oxide particles.

4. The inorganic oxide transparent dispersion according to Claim 1,
wherein the high-polarity solvent is any one or both of isopropyl alcohol and propylene glycol monomethyl ether.

5. A resin composition used to form a transparent composite comprising:
the inorganic oxide transparent dispersion according to any one of Claims 1 to 4; and
a resin.

6. A transparent composite formed using the resin composition used to form a transparent composite according to Claim 5.

7. An optical member comprising:
the transparent composite according to Claim 6.
